(19) Europäisches Patentamt
European Patent Office
Office européen des brevets

(11) Numéro de publication: **0 065 925**
**B1**

(12) # FASCICULE DE BREVET EUROPEEN

(45) Date de publication du fascicule du brevet: **23.10.85**

(51) Int. Cl.⁴: **C 08 G 77/08**, B 01 J 31/06

(21) Numéro de dépôt: **82420061.2**

(22) Date de dépôt: **11.05.82**

(54) **Procédé d'obtention de polysiloxanes de masses moléculaires élevées par polymérisation et réarrangement de polysiloxanes en présence de catalyseur constitué par un support minéral poreux recouvert d'un film polymérique porteur de groupement sulfonique ou phosphonique.**

(30) Priorité: **12.05.81 FR 8109571**

(43) Date de publication de la demande:
**01.12.82 Bulletin 82/48**

(45) Mention de la délivrance du brevet:
**23.10.85 Bulletin 85/43**

(84) Etats contractants désignés:
**BE DE FR GB IT NL**

(56) Documents cités:
**FR - A - 2 359 634**
**US - A - 4 038 213**
**US - A - 4 222 952**

(73) Titulaire: **RHONE-POULENC SPECIALITES CHIMIQUES, "Les Miroirs" 18, Avenue d'Alsace, F-92400 Courbevoie (FR)**

(72) Inventeur: **Dromard, Adrien, 73 - 75, rue Brillat-Savarin, F-75013 Paris (FR)**
Inventeur: **Millet, Claude, 78, rue du Puits Vieux, F-69800 Saint-Priest (FR)**

(74) Mandataire: **Chichery, Guy et al, RHONE-POULENC RECHERCHES Service Brevets Chimie et Polymères Centre de Recherches de Saint-Fons B.P. 62, F-69192 St-Fons Cédex (FR)**

EP 0 065 925 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un procédé de préparation d'organopolysiloxanes de masse moléculaire élevée par polymérisation et réarrangement d'organopolysiloxanes de faible masse moléculaire en présence de catalyseur porteur de groupements acide sulfonique ou phosphorique.

On connait déjà de nombreux procédés qui permettent par catalyse acide de polymériser et de réarranger les organopolysiloxanes de faible masse moléculaire, les polysiloxanes étant linéaires et/ou cycliques.

Les catalyseurs à groupements sulfoniques utilisés sont généralement constitués par des résines échangeuses de cation. C'est ainsi que l'on trouve décrit dans US-A-3 322 722 de DOW CORNING un procédé discontinu de réarrangement de mélanges de composés organosiliciques contenant des liaisons siloxaniques, alkoxysilylées, acyloxysilylées, le procédé étant réalisé en présence d'un catalysaeur acide for tel que les résines sulfonées commerciales (amberlyst 15®). Sur de tels catalyseurs les liaisons siloxaniques, alkoxysilylées et acyloxysilylées sont simultanément réarrangées.

Dans FR-A-2 111 629 d'UNION CARBIDE sous priorité américaine du 21/10/1970, on trouve décrit un procédé d'obtention de polysiloxanes de masses moléculaires élevées par polymérisation et réarrangement en continu de charges polysiloxaniques de masse moléculaire peu élevée, par passage des charges siloxaniques sur un lit de résine échangeuse de cation du type macroréticulaire sulfonique ayant un volume moyen ce pores d'au moins 0,01 $cm^3/g$ et préférentiellement supérieur à 0,03 $cm^3/g$. Les résines macroréticulées sulfoniques sont décrites dans le US-A-3 037 052. Les meilleurs résultats sont obtenus avec l'amberlyst®.

US-A-4 222 952 décrit l'utilisation de polymères perfluorés présentant des groupes sulfoniques pendants et US-A-4 038 213 décrit l'utilisation de polymères de ce type mais supportés sur un support minéral poreux et appliqués à la conversion d'hydrocarbures.

Comme dans toute optique industrielle, il se posait la question de mettre au point des catalyseurs sulfoniques qui permettent d'augmenter encore la productivité et principalement pour les procédés réalisés en continu (celle-ci étant par exemple exprimée par kg de charge siloxanique polymérisée et réarrangée par heure et par litre de catalyseur). L'invention répond précisément à ce but en permettant, comme on le verra plus loin, und très forte élévation de la productivité. Il est également à souligner que, du fait de l'emploi d'un support greffé, le catalyseur résiste remarquablement bien à l'écrasement et à l'abrasion, ce qui permet son utilisation sous pression élevée et ce qui implique, en outre, une durée de vie particulièrement élevée.

Il a été maintenant trouvé, et c'est ce qui constitue l'objet de la présente invention, un procédé de préparation d'organopolysiloxanes de masse moléculaires élevée par polymérisation et réarrangement d'organopolysiloxanes de masse moléculaire peu élevée en présence de catalyseur porteur de groupements acides caractérisé en ce que le catalyseur est constitué par un support minéral poreux ayant un diamètre de pore moyen supérieur à 2 nm (20 angstrom), un volume poreux compris entre 0,2 et 2 ml/g, le support étant revêtu d'un dépôt en quantité inférieure à 15 $mg/m^2$ d'un matériau polymérique porteur de groupements acides choisis parmi les groupements sulfoniques ou phosphoniques et possédant une capacité d'échange ionique inférieure à 2 milli équivalent par g.

On a observé que l'utilisation d'un tel catalyseur permettait d'obtenir les polysiloxanes de masse moléculaire élevée avec une très haute productivité et ceci tant en discontinu qu'en continu. Il est en particulier remarquable de constater que cette productivité est considérablement plus élevée que celle obtenue en mettant en oeuvre d'autres catalyseurs à groupements sulfoniques dont les caractéristiques physico-chimiques ainsi que la teneur en milliéquivalent $H^+$ sont du même ordre de grandeur que celles des catalyseurs utilisés dans le cadre de la présente invention. Un tel résultat est totalement inattendu.

Le catalyseur acide sulfonique ou phosphonique supporté utilisé selon l'invention a avantageusement une granulométrie comprise entre 4 µm et 5 mm. La surface spécifique du support minéral poreux dont il est issu n'est pas critique et est en général comprise entre 5 et 500 $m^2/g$ et de préférence entre 50 $m^2$ et 150 $m^2/g$. Le diamètre de pore moyen du support minéral poreux est en général compris entre 2 nm (20 angstrom) et 300 nm (3000 angstrom) et de préférence compris entre 2 nm et 250 nm (20 et 2500 angstrom). La porosité du support minéral poreux est préférentiellement comprise entre 0,2 et 1,5 ml/g.

Le diamètre de pore moyen ainsi que la porosité sont déterminés par la technique classique de porosimétrie au mercure, en établissant la courbe représentant le volume de mercure absorbé en fonction de la pression.

Comme support minéral poreux servant pour l'obtention du catalyseur on met en oeuvre des oxydes métalliques divers tels que les oxydes de titane, les alumines et les silices. Les corps de gels siliceux à grands pores obtenues par agglomération d'hydrogels siliceux (sèchage, calcination, compression, extrusion de gouttes de sols des oxydes ou hydroxydes siliceux) conviennent bien. On peut ainsi citer les silices poreuses agglomérées telles que définies dans FR-A-2 332 234 et les corps de gels siliceux à grands pores éventuellement traités sous pression en autoclave en présence d'un milieu à réaction ammoniacale tels que dicrits dans FR-A-2 093 176.

La nature des matériaux polymériques qui revêtent le support minéral poreux n'est pas critique. Il

s'agit en général de matériaux réticulés synthétiques, ou artificiels dérivant de produits naturels. Les groupements fonctionnels acides peuvent faire à l'origine partie intégrante du matériau polymérique ou peuvent être fixés au matériau selon tout procédé connu lors d'une étape supplémentaire.

En général et selon une variante avantageuse le matériau polymérique est synthétique: il s'agit d'un polymère, d'un copolymère ou d'un polycondensat.

Parmi les matériaux polymériques synthétiques sur lesquels il faudra ultérieurement fixer un groupement sulfonique ou phosphonique on citera dans le groupe de polycondensats les résines formophénoliques et les polyépichlorhydrines, et dans le groupe des polymères ou copolymères ceux issus de monomères vinyliques comme par exemple le styrène et ses dérivés, les acides acryliques, méthacrylique, vinylbenzoïque, qui réticulent avec des monomères polyfonctionnels tels que diacrylate ou diméthacrylate de mono- ou poly-alkylène glycol, divinylbenzène, vinyltrialcoxysilane, vinyltrihalogènosilane, bis méthylène acrylamide, en présence d'un initiateur libérant des radicaux libres comme les peroxydes organiques et les azonitriles, ou en présence de rayons ultraviolets.

Les matériaux polymériques non porteurs des groupements acides sulfonique ou phosphonique seront modifiés suivant tout procédé connu de manière à introduire des groupements sulfoniques ou phosphoniques (cf. par exemple Encyclopedia of polymer science and technology vol. 13 »sulfur-containing polymers« p. 463 et suivantes — édition 1970). Les groupements introduits peuvent être des groupements sulfoniques ou alkylsulfoniques, tels que méthylsulfoniques.

On peut également préparer directement le revêtement polymérique porteur de groupement sulfonique ou phosphonique, par polymérisation ou copolymérisation de monomères sulfonés ou phosphonés (acide éthylène sulfonique, acide méthallylsulfonique, p-styrène sulfonique, acide vinylphosphonique ou acrylates d'hydroxyalkylphosphonates).

De telles méthodes sont par exemple décrites dans Encyclopedia of polymer science and technology (cf. référence citée et vol. 10 »Phosphorus containing polymers« p. 123 et suivantes).

Préférentiellement, les groupements fonctionnels acides sulfonique ou phosphonique sont introduits en deux étapes par mise en place du dépôt du matériaux polymérique, puis sulfonation de ce dernier.

Pour obtenir un revêtement de matériau polymérique sur le support minéral, on peut utiliser toute technique connue. Bien entendu, le revêtement ou dépôt ne constitue évidemment pas une couche obligatoirement continue. On peut, par exemple, et ceci constitue un mode particulièrement avantageux, imprégner le support d'une solution du ou des monomères et éventuellement du catalyseur dans un solvant, ce qui permet une bonne répartition des monomères sur toute la surface du support minéral, le solvant est ensuite évaporé et les monomères réticulés selon les procédés connus. Comme solvant, on met en oeuvre tout produit solvant des monomères et du catalyseur, dont le point d'ébullition est inférieur ou égal à 80° C et de préférence, le plus bas possible pour favoriser son évaporation ultérieure.

Ce sont, par exemple, le chlorure de méthylène, l'éther éthylique, le benzène, l'acétone et l'acétate d'éthyle.

Dans l'opération de revêtement du support minéral, la quantité de monomère(s) à mettre en oeuvre doit être telle que la quantité de polymère réticulé possédant des groupes fonctionnels, répartis à la surface du support minéral, soit inférieure à 15 et de préférence comprise entre 0,3 et 8 $mg/m^2$.

Selon une variante particulièrement avantageuse, le support minéral a une granulométrie comprise entre 4 µm et 5 mm, son diamètre de pore moyen est compris entre 2 et 250 nm (20 et 2500 angstrom) et son volume poreux est compris entre 0,2 et 1 ml/g.

Selon une autre variante préférentielle, le catalyseur supporté est porteur de groupement sulfonique. Avantageusement la capacité ionique d'échange est inférieure à 1 milliéquivalent $H^+$ par gramme.

On peut, dans le cadre de la présente invention polymériser et réarranger des composés siloxaniques constitués par des cyclosiloxanes et/ou des organopolysiloxanes acyliques de masses moléculaires peu élevées.

Les cyclosiloxanes polymérisables ont pour formule (I):

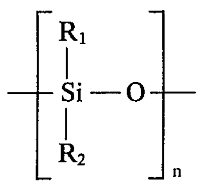

(I)

dans laquelle les divers symboles représentent:

- n: un nombre entier supérieur ou égal à 3.
- $R_1$: un atome d'hydrogène, un radical alkyle, alkényle, halogénoalkyle, halogénoalkényle, ces divers radicaux ayant de 1 à 5 atomes de carbone et comportant la cas échéant de 1 à 6 atomes de chlore et/ou de fluor; un radical cycloalkyle, cycloalkényle ces radicaux ayant de 3 à 8 atomes de

carbone et étant éventuellement substitués par 1 à 4 atomes de chlore et/ou de fluor; un radical cyanoalkyle ayant de 3 à 4 atomes de carbone; un radical phényle, alkylphényle ou phénylalkyle ayant de 6 à 8 atomes de carbone, ces radicaux étant éventuellement substitués par 1 à 4 atomes de chlore et/ou de fluor.

— $R_2$: un radical tel que $R_1$ ou encore un groupement alkoxy $-OR_3$, $R_3$ ayant la même signification que $R_1$.

A titre illustratif, on peut citer parmi les radicaux $R_1$ les radicaux suivants:

— un atome d'hydrogène
— les groupes: méthyle; éthyle; propyle; isopropyle; butyle; isobutyle, $\alpha$-pentyle; t-butyle, chlorméthyle; dichlorométhyle; $\alpha$-chloroéthyle; $\alpha,\beta$-dichloroéthyle; fluorométhyle; difluorométhyle; $\alpha,\beta$-difluoroéthyle; trifluoro-3,3,-3 propyle; trifluoro cyclopropyle; trifluoro-4,4,4 butyle; heptafluoro-3,3,3,4,4,5,5 pentyle; $\beta$-cyanoéthyle; $\gamma$-cyanopropyle; phényle; p-chlorophényle; m-chlorophényle; dichloro-3,5 phényle; trichlorophényle; tétrachlorophényle; o-, p-, ou m-tolyle; $\alpha,\alpha,\alpha$-trifluorotolyle; xylyles comme diméthyl-2,3 phényle; diméthyl-3,4 phényle.

Préférentiellement n est égal à 3, 4, 5 ou 6 et encore plus avantageusement 3 ou 4 et $R_1$ représente un atome d'hydrogène, un radical méthyle, ou vinyle, ces radicaux étant éventuellement substitués par un ou deux atomes de chlore et/ou de fluor; un radical phényle tolyle, xylyle éventuellement substitué par un ou deux atomes de chlore et/ou de fluor.

$R_2$ représente préférentiellement outre les significations préférentielles du radical $R_1$ des radicaux hydroxy, méthoxy.

Tout particulièrement, on polymérise dans le cadre de la présente invention les cyclosiloxanes constitués par l'hexaméthylcyclotrisiloxane ($D_3$) et/ou de l'octaméthylcyclotétrasiloxane ($D_4$).

A titre illustratif, on peut citer parmi les cyclosiloxanes utilisables dans le cadre de la présente invention:

— l'hexaméthylcyclotrisiloxane ($D_3$)
— l'octaméthylcyclotétrasiloxane ($D_4$)
— l'octaphénylcyclotétrasiloxane
— le tétraméthylcyclotétrasiloxane
— le tétraméthyltétravinylcyclotétrasiloxane

Dans le cadre de la présente invention, on peut également polymérisat et réarranger des composés siloxaniques constitués par des cyclosiloxanes de formule (I) associés à des organopolysiloxanes acyliques, de masse moléculaire peu élevée et de nature linéaire, ramifiée ou réticulée.

Ces organopolysiloxanes qui contiennent au plus 200 atomes de silicium par mole et dont la nature n'est pas critique sont constitués de motifs de formule générale (II):

$$(R_1)_xSiO_{\frac{4-x}{2}} \qquad (II)$$

éventuellement associés à des motifs de formule (III):

$$(R_1)_y(R_2)_zSiO_{\frac{4-y-z}{2}} \qquad (III)$$

les divers symboles ayant la signification suivante:

— $R_1$: un atome d'hydrogène, un radical alkyle, alkényle, halogénoalkyle, halogénoalkényle, ces divers radicaux ayant de 1 à 5 atomes de carbone et comportant le cas échéant de 1 à 6 atomes de chlore et/ou de fluor; un radical cycloalkyle, cycloalkényle ces radicaux ayant de 3 à 8 atomes de carbone et étant éventuellement substitués par 1 à 4 atomes de chlore et/ou de fluor; un radical cyanoalkyle ayant de 3 à 4 atomes de carbone; un radical phényle, alkylphényle ou phénylalkyle ayant de 6 à 8 atomes de carbone, ces radicaux étant éventuellement substitués par 1 à 4 atomes de chlore et/ou de fluor.
— $R_2$: un radical tel que $R_1$ ou encore un groupement alkoxy $-OR_3$, $R_3$ ayant la même signification que $R_1$.
— x, et y: nombres entier égaux à 0, 1, 2 ou 3.
— z: nombre entier égal ou inférieur à 2.

Préférentiellement, les composés siloxaniques à polymériser et constitués par un mélange de cyclosiloxanes et d'organopolysiloxanes acycliques comprennent en poids au moins 50% de cyclosiloxanes. Dans un tel contexte on polymérise avantageusement les mélanges contenant au moins 50% de

$D_3$ et/ou de $D_4$, le complément étant constitué par un organopolysiloxane linéaire »$M_2D_p$« et ayant pour formule (IV):

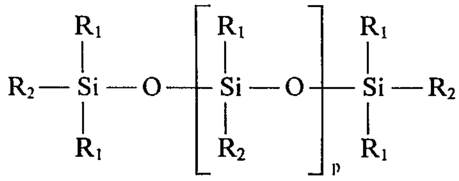

(IV)

les divers symboles ayant la signification suivante:

— p: nombre entier allant de 1 à 100
— $R_1$ et $R_2$: même signification que celles indiquées dans le cadre des cyclosiloxanes.

Parmi les organosiloxanes de faible masse moléculaire et de structure linéaire, on peut citer:

— l'hexaméthyldisiloxane
— le tétraméthyldivinyldisiloxane
— les polydiméthylpolysiloxanes $\alpha,\omega$ dihydroxylés.
— les polydiméthylpolysiloxanes $\alpha,\omega$ bis hydroxydiméthylsilylé
— les polydiméthylpolysiloxanes $\alpha,\omega$ diméthoxylés
— le tétraphényldisiloxane diol
— les $\alpha,\omega$ dihydrogéno-polydiméthylpolysiloxanes

Enfin, on peut dans le cadre de la présente invention polymériser et réarranger les organopolysiloxanes acycliques, linéaires ou ramifiés tels que précédemment définis.

Lorsque les organopolysiloxanes acycliques linéaires ou ramifiés contiennent des groupements hydroxysilylés il est possible outre les réactions de réarrangement et/ou de polymérisation d'effecteur une polycondensation totale des groupements Si-OH à condition d'éliminer par tout moyen approprié (barbotage gazeux ou distillation azéotropique), l'eau résultant de la condensation au fur et à mesure de sa formation.

Il doit être également entendu que l'on ne sortirait pas du cadre de l'invention en associant aux organosiloxanes à polymériser et à réarranger et tels que précédemment définis, une faible quantité représentant jusqu'à 20% en poids par exemple d'un silane porteur d'un ou plusieurs groupements alcoxy tels que par exemple le méthyltriéthoxysilane, le vinyl-tris(méthoxyéthoxy)silane et le phényltriethoxysilane.

Le procédé selon l'invention peut être réalisé en discontinu ou en continu à une température comprise entre 20 et 200° C, préférentiellement entre 40 et 160° C. La polymérisation et le réarrangement peuvent être effectués éventuellement en milieu solvant ou non. Si on opte pour l'usage d'un solvant, ce dernier sera choisi parmi tous les solvants utilisables pour les polymérisations de cyclosiloxanes; parmi ceux-ci on citera le benzène, le toluène, le THF et le dioxanne. Préférentiellement, le procédé selon l'invention est réalisé en milieu non solvant.

La technique décrite ci-avant présente un intérêt considérable dans la polymérisation des siloxanes à l'échelle industrielle en continu ou en discontinu. En continu la productivité exprimée en kg de siloxane polymérisé par heure et par litre de catalyseur est de l'ordre de 15 kg/h/l ou plus. Cette technique permet en particulier de préparer des huiles organosiliciques du type méthyle, méthylphényle, méthylvinyle dont les viscosités sont en général comprises entre 0,1 et 5000 m Pas et avantageusement entre 1 et 1000 m Pas.

Les exemples qui suivent illustrent l'invention.

Exemple 1

On charge dans un réacteur agité un mélange d'octaméthylcycloétrasiloxane ($D_4$) et d'hexaméthyldisiloxane ($M_2$). Après chauffage à 80° C le catalyseur est ajouté en quantité déterminée. Dès lors on observe l'évolution de la composition de la masse réactionnelle en fonction de la durée de la polymérisation, ce qui permet de déterminer le temps pour atteindre l'équilibre. Cette valeur permet en assimilant le réacteur agité à un réacteur parfait, de calculer la productivité que l'on exprime par quantité de charge traitée par heure et par kg de catalyseur. Cette productivité peut être facilement convertie en kg/h et par litre de réacteur sachant que la densité apparente des catalyseurs essayés est de 0,66 g/ml.

Les caractéristiques des grains de silice agglomérés et des catalyseurs ainsi que les résultats figurent dans le tableau qui suit:

| Essai | Description du catalyseur<br>Description du support minéral<br>Granulométrie en micromètre | Diamètre de pore moyen en nm (Angstrom) | Porosité en ml/g | Groupement acide | Quantité matériau polymérique mg/m² | Milli équiv. H⁺/g | Viscosité de l'huile PDMS*) obtenue en m Pa/s | Productivité en kg/h/l de cata. |
|---|---|---|---|---|---|---|---|---|
| 1 | 100—200 | 8,6 (86) | 0,97 | sulfonique | 0,70 | 1,13 | | 7,1 |
| 2 | 100—200 | 8,6 (86) | 0,97 | sulfonique | 0,78 | 1,36 | 350 | 11,2 |
| 3 | 100—200 | 8,6 (86) | 0,97 | sulfonique | 0,80 | 1,44 | | 10,1 |
| 4 | 100—300 | 14 (140) | 1,0 | sulfonique | 1,4 | 1,22 | 350 | 11,2 |
| 5 | 100—200 | 28 (280) | 1,05 | sulfonique | 2,30 | 0,97 | | 28,4 |
| 6 | 100—200 | 28 (280) | 1,05 | sulfonique | 1,73 | 0,83 | | 29,6 |
| 7 | 100—200 | 28 (280) | 1,05 | sulfonique | 1,37 | 0,66 | 350 | 26,5 |
| 8 | 100—200 | 28 (280) | 1,05 | sulfonique | 1,27 | 0,57 | | 28,1 |
| 9 | 100—200 | 28 (280) | 1,05 | sulfonique | 0,81 | 0,37 | | 17,9 |
| 10 | 100—300 | 110 (1100) | 1,05 | sulfonique | 4,3 | 0,60 | 350 | 24,3 |
| 11 | 100—300 | 110 (1100) | 1,05 | sulfonique | 2,2 | 0,32 | 350 | 20,2 |
| 12 | 100—200 | 320 (3200) | 1,15 | sulfonique | 4,1 | 0,25 | 350 | 14,1 |

*) PDMS: polydiméthylsiloxanique

A titre de comparaison on a effectué la même réaction en utilisant en tant que catalyseur de l'amberlyst®15 de la Société Rohm et Haas. Ce catalyseur qui est une résine entièrement polymérique du type macroréticulée sulfonique présente les caractéristiques suivantes:

- porosité: 0,70 ml/g
- diamètre de pore moyen: 31,2 nm (312 angstrom)
- milli équivalent $H^+$/g: 4,9
- granulométrie: 1 à 1,25 mm
- surface spécifique: 45 $m^2$/g

On a mesuré que la productivité en huile polydiméthylpolysiloxanique était seulement de 6,3 kg/h/litre de catalyseur.

Les catalyseurs ont été préparés selon la même mode opératoire. Ces catalyseurs sont des corps de gels siliceux à grands pores. A titre illustratif on décrira la préparation du catalyseur utilisé à l'essai n° 8: 100 g de silice ayant une granulométrie de 100 à 200 microns, une surface spécifique de 108 $m^2$/g un diamètre de pore moyen de 28 nm (280 angstrom) et une porosité de 1,05 ml/g sont séchés à 150° C sous pression réduite pendant 5 heures; la silice sèche obtenue est introduite dans une solution de 250 ml de chlorure de méthylène, 30 ml de styrène, 15 ml de vinyltriéthoxysilane et 0,5 g d'azo-bis-isobutyronitrile.

Le chlorure de méthylène est évaporé à température ambiante puis la silice imprégnée est chauffée à 120° C pendant 6 heures à pression atmosphérique pour obtenir la réticulation.

La silice réticulée est alors mise en suspension dans 400 ml de chlorure de méthylène et chauffée à ébullition pendant 2 heures. Après filtration la silice est lavée à l'acétone puis séchée. L'analyse donne un taux de carbone de 7,6% en poids par rapport à la silice revêtue.

50 g de la silice obtenue sont mis en suspension dans 150 ml de chlorure de méthylèn. Après avoir coulé en 30 min à température ambiante 50 ml d'acide chlorosulfonique, la masse réactionnelle est maintenue sous agitation pendant 2 heures à température ambiante.

La silice est essorée, lavée successivement avec 200 ml de chlorure de méthylène, 100 ml d'acétone et de l'eau permutée jusqu'à neutralité, la silice ainsi lavée est ensuite mise en suspension dans 250 ml d'eau permutée que l'on porte au reflux pendant 1 heure. Après filtration, lavage à l'eau permutée jusqu'à neutralité puis séchage sous vide à 50° C, on obtient une silice greffée par des groupements échangeurs de cations type fort:

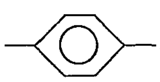—$SO_3H$ qui présente les caractéristisques suivantes:

%C = 7,5
%S = 2,1
Capacité ionique = 0,57 meq/g
Quantité de matériau organique fixé = 1,27 mg/$m^2$.

Exemple 2

— Essais en continu

Le réacteur est essentiellement constitué d'un tube inox de diamètre 2,5 cm, hauteur 18,5 cm ce qui correspond à un volume utile de 91 $cm^3$; ce tube est obstrué aux deux extrémités par des disques d'inox fritté (classe n° 10) et contient 91 $cm^3$ de catalyseur. La charge constituée de 125 g de $M_2$ et 876 g de $D_4$ est alimentée par le bas à débits variables par l'intermédiaire d'une pompe à piston. La température du réacteur est maintenue à 75° C.

Pour chaque débit, l'analyse de la composition de l'effluent permet de calculer le rendement en polymère et les taux de conversion du $D_4$ et du $M_2$. La productivité (P) est calculée en tenant compte du volume du lit catalytique et du débit maximum (Qm kg/h) de la charge qui permet de conserver l'équilibre réactionnel

$$P = Q\,m \times 1000/91 \text{ kg/h/l}.$$

Avec le catalyseur décrit à l'essai n° 4 de l'exemple 1 on a déterminé que la productivité était de 15 kg/h/litre de catalyseur.

La productivité a été mesurée dans les mêmes conditions en substituant au catalyseur l'amberlyst®15. On a trouvé une productivité de 6 kg/h/litre de catalyseur.

Exemple 3

Dans le réacteur de l'exemple 1, muni d'un analyseur décanteur permettant d'éliminer l'eau et de recycler la phase siloxanique, on charge 150 g d'un mélange contenant 130 g de polydiméthylsiloxane $\alpha$, $\omega$ bis (hydroxydiméthylsilyle) de masse moléculaire en nombre de 2900 (viscosité 120, mPa/s à 25° C) et de 20 g hexaméthyldisiloxane.

Le catalyseur est celui utilisé dans l'essai n° 7 de l'exemple 1. La température est maintenue dans le réacteur à 150° C sous barbotage d'azote (5 l/h).

On détermine la productivité maximale en mesurant le taux de conversion des OH et en suivant les variations de la viscosité. La productivité maximale est trouvée égale à 30 kg/h/l. On vérifie que la teneur en OH est inférieure à 200 mmg/kg.

Exemple 4

Le réacteur est essentiellement constitué par un tube en acier inox de diamètre 50 mm et de hauteur 15 mm qui correspond à un volume utile de 29,45 $cm^3$. Ce tube est terminé à chaque extrèmité par des disques d'inox fritté et contient 13 g de catalyseur obtenu à partir de corps de gels de silices à grands pores et ayant les caractéristiques physico-chimiques suivantes:

| | |
|---|---|
| — taille des particules en micromètres | : 100 à 300 |
| — diamètre moyen de pore | : 110 nm (1100 angstrom) |
| — porosité en ml/g | : 1,05 |
| — quantité de matériau polymérique déposé en mg/$m^2$ | : 4,2 |
| — milli équivalents $H^+$ | : 0,5 |

Une charge consistant en 77% de cyclodiméthylsiloxane Dn (n étant compris entre 3 et 6 ou étant éventuellement égal à 3 ou 6) et 23% d'$\alpha$, $\omega$ dihydroxypolydiméthylsiloxane, ayant entre 0,8 et 1,5 g de groupement hydroxyle par kg, on ajoute de l'hexaméthyldisiloxane en proportions variables. Cette nouvelle charge est alimentée par le bas dans le réacteur maintenu à 150° C.

On mesure la productivité maximale pour différentes teneurs en hexamethyldisiloxane ($M_2$).

Lorsque la teneur en $M_2$ est de 13,4 g pour 100 g de charge on obtient un polymère de viscosité égale à 21 mPa/s à 25% avec une productivité de 34,2 kg/h/l.

Exemple 5

On effectue un essai analogue à celui de l'exemple 1 en remplaçant l'hexaméthyldisiloxane par le tétraméthyldisiloxane ($M'_2$).

Le catalyseur est celui de l'essai n° 7 de l'exemple 1. La température est maintenue à 85° C.

Lorsque la teneur en $M'_2$ est de 304%, on obtient un polymère ayant une viscosité de 4,6 mPa/s avec une productivité de 24,16 kg/h/l.

On observe que la teneur en hydrogène (groupement Si—H) demeure constante (méthode décrite par A. Lee John Willey and Sons (1974) analysis of silicones: hydrogen evolutions methods).

Exemple 6

Selon le mode opératoire de l'exemple 5, on polymérise et réarrange une charge constituée par un mélange de diméthylcyclosiloxane (Dn), de méthylhydrogénocyclosiloxanes (D'n) et d'hexaméthyldisiloxane ($M_2$) en proportions variées. L'essai est effectué à 60° C.

Pour une charge constituée de 66,2 g de $D'_4$, 853 g de $D_4$ et 80,3 g de $M_2$, on obtient un polymère ayant une viscosité de 25,5 mPa/s avec productivité de 19,9 kg/h/l.

La teneur en groupement Si—H demeure constante.

**Revendications**

1. Procédé de préparation d'organopolysiloxanes de masse moléculaire élevée par polymérisation et réarrangement d'organopolysiloxanes de masse moléculaire peu élevée en présence de catalyseur porteur de groupements acides caractérisé en ce que le catalyseur est constitué par un support minéral poreux ayant un diamètre de pore moyen supérieur à 2 nanomètres (20 angstrom), un volume poreux compris entre 0,2 et 2 ml/g, le support étant revêtu d'une quantité inférieure à 15 mg/$m^2$ d'un matériau polymérique porteur de groupements acides choisis parmi les groupements sulfoniques ou phosphoniques et possédant une capacité d'échange ionique inférieure à 2 milli équivalent par g.

2. Procédé selon la revendication 1 dans lequel le diamètre de pore moyen ou support minéral poreux est compris entre 2 nm (20 angstrom) et 300 nm (3000 angstrom).

3. Procédé selon l'une des revendications 1 et 2 dans lequel le volume poreux du support minéral est compris entre 0,2 et 1,5 ml g.

4. Procédé selon l'une des revendications 1 à 3 dans lequel le support poreux minéral a un diamètre de pore moyen compris entre 2 et 250 nm (20 et 2500 angstrom), un volume poreux compris entre 0,2 et 1 ml/g et une granulométrie comprise entre 4 µm et 5 mm.

5. Procédé selon l'une des revendications 1 à 4 dans lequel le revêtement de matériau polymérique comporte des groupements sulfoniques.

6. Procédé selon la revendication 5 dans laquelle la capacité ionique d'échange est inférieure à 1 milliéquivalent $H^+$ par gramme.

7. Procédé selon l'une quelconque des revendications précédentes, caractérisé en ce que ledit support minéral sont des corps de gels siliceux.

8. Procédé selon la revendication 7, caractérisé en ce que ledit matériau polymérique est fixé sur ledit support minéral poreux.

9. Procédé selon l'une des revendications précédentes dans lequel les composés organopolysiloxaniques de masses moléculaires plus faibles sont constituées par des cyclosiloxanes de formule (I):

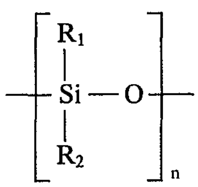

(I)

dans laquelle les divers symboles représentent:

— n: un nombre entier supérieur ou égal à 3.
— $R_1$: un atome d'hydrogène, un radical alkyle, alkényle, halogénoalkyle, halogénoalkényle, ces divers radicaux ayant de 1 à 5 atomes de carbone et comportant le cas échéant de 1 à 6 atomes de chlore et/ou de fluor; un radical cycloalkyle, cycloalkényle ces radicaux ayant de 3 à 8 atomes de carbone et étant éventuellement substitués par 1 à 4 atomes de chlore et/ou de fluor; un radical cyanoalkyle ayant de 3 à 4 atomes de carbone; un radical phényle, alkylphényle ou phénylalkyle ayant de 6 à 8 atomes de carbone, ces radicaux étant éventuellement substitués par 1 à 4 atomes de chlore et/ou de fluor.
— $R_2$: un radical tel que $R_1$ ou encore un groupement hydroxyle ou alkoxyle $-OR_3$, $R_3$ ayant la même signification que $R_1$.

10. Procédé selon l'une des revendications 1 à 8 dans lequel les composés organopolysiloxaniques de masses moléculaires plus faibles sont constituées par des cyclosiloxanes de formule (I):

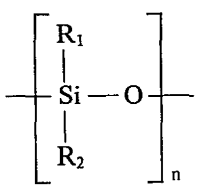

(I)

associés à des organopolysiloxanes de formule générale (II):

$$(R_1)_x SiO_{\frac{4-x}{2}} \qquad \text{(II)}$$

éventuellement associés à des motifs de formule (III):

$$(R_1)_y (R_2)_z SiO_{\frac{4-y-z}{2}} \qquad \text{(III)}$$

les organopolysiloxanes ayant au plus 200 atomes de silicium par mole et les divers symboles ayant la signification suivante:

— $R_1$: un atome d'hydrogène, un radical alkyle, alkényle, halogénoalkyle, halogénoalkényle, ces divers radicaux ayant de 1 à 5 atomes de carbone et comportant le cas échéant de 1 à 6 atomes de chlore et/ou de fluor; un radical cycloalkyle, cycloalkényle ces radicaux ayant de 3 à 8 atomes de carbone et étant éventuellement substitués par 1 à 4 atomes de chlore et/ou de fluor; un radical

cyanoalkyle ayant de 3 à 4 atomes de carbone; un radical phényle, alkylphényle ou phénylalkyle ayant de 6 à 8 atomes de carbone, ces radicaux étant éventuellement substitués par 1 à 4 atomes de chlore et/ou de fluor.

— $R_2$: un radical tel que $R_1$ ou encore un groupement hydroxyle ou alkoxyle $-OR_3$, $R_3$ ayant la même signification que $R_1$.
— x, et y: nombres entiers égaux à 0, 1, 2 ou 3.
— z: nombre entier égal ou inférieur à 2.

11. Procédé selon la revendication 10 dans lequel les composés organopolysiloxaniques de masse moléculaire plus faible sont constitués par au moins 50% de $D_3$ et/ou de $D_4$, le complément étant constitué par un organopolysiloxane linéaire »$M_2D_p$« et ayant pour formule (IV):

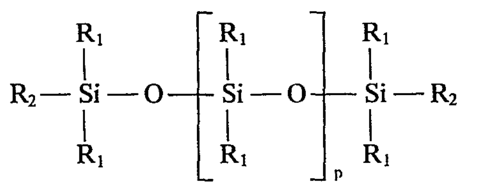
(IV)

les divers symboles ayant la signification suivante:

— p: un nomore entier allant de 1 à 100
— $R_1$: un atome d'hydrogène, un radical alkyle, alkényle, halogénoalkyle, halogénoalkényle, ces divers radicaux ayant de 1 à 5 atomes de carbone et comportant le ces échéant de 1 à 6 atomes de chlore et/ou de fluor; un radical cycloalkyle, cycloalkényle ces radicaux ayant de 3 à 8 atomes de carbone et étant éventuellement substitués par 1 à 4 atomes de chlore et/ou de fluor: un radical cyanoalkyle ayant de 3 à 4 atomes de chlore et/ou de fluor; un radical cyanoalkyle ayant de 3 à 4 atomes de carbone; un radical phényle, alkylphényle ou phénylalkyle ayant de 6 à 8 atomes de carbone, ces radicaux étant éventuellement substitués par 1 à 4 atomes de chlore et/ou de fluor.
— $R_2$: un radical tel que $R_1$ ou encore un groupement hydroxyle ou alkoxyle $-OR_3$, $R_3$ ayant la même signification que $R_1$.

**Patentansprüche**

1. Verfahren zur Herstellung von Organopolysiloxanen mit hohem Molekulargewicht durch Polymerisation und Umlagerung von Organopolysiloxanen mit wenig hohem Molekulargewicht in Gegenwart eines Katalysators mit sauren Gruppen, dadurch gekennzeichnet, daß der Katalysator aus einem porösen, mineralischen Träger mit einem mittleren Porendurchmesser oberhalb $^1/_2$ Nanometer (20 Ångström) und einem Porenvolumen zwischen 0,2 und 2 ml/g besteht, wobei der Träger mit einer Menge unterhalb 15 mg/$m^2$ eines polxmeren Materials überzogen ist, das saure Gruppen trägt, ausgewählt unter den Sulfon- oder Phosphongruppen und das eine Ionenaustauschkapazität unterhalb 2 Milliäquivalent pro g besitzt.

2. Verfahren gemäß Anspruch 1, dadurch gekennzeichnet, daß der mittlere Porendurchmesser des porösen, mineralischen Trägers zwischen 2 nm (20 Å) und 300 nm (3000 Å) liegt.

3. Verfahren gemäß einem der Ansprüche 1 und 2, dadurch gekennzeichnet, daß das Porenvolumen des mineralischen Trägers zwischen 0,2 und 1,5 ml/g liegt.

4. Verfahren gemäß einem der Ansprüche 1 bis 3, dadurch gekennzeichnet, daß der poröse, mineralische Träger einen mittleren Porendurchmesser zwischen 2 und 250 nm (20 und 2500 Å), ein Porenvolumen zwischen 0,2 und 1 ml/g und eine Körnung zwischen 4 µm und 5 mm hat.

5. Verfahren gemäß einem der Ansprüche 1 bis 4, dadurch gekennzeichnet, daß der Überzug des polymeren Materials Sulfongruppen trägt.

6. Verfahren gemäß Anspruch 5, dadurch gekennzeichnet, daß die Ionenaustauschkapazität unterhalb 1 Milliäquivalent $H^+$ pro g beträgt.

7. Verfahren gemäß einem der vorhergehenden Ansprüche, dadurch gekennzeichnet, daß der mineralische Träger Siliciumdioxidgelkörper sind.

8. Verfahren gemäß Anspruch 7, dadurch gekennzeichnet, daß das polymere Material auf dem genannten porösen, mineralischen Träger fixiert ist.

9. Verfahren gemäß einem der vorhergehenden Ansprüche, dadurch gekennzeichnet, daß die Organopolysiloxanverbindungen mit geringerer Molekularmasse aus Cyclosiloxanen der Formel (I)

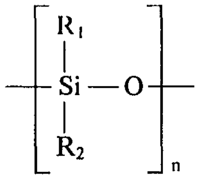

(I)

bestehen, worin die verschiedenen Symbole bedeuten:

- n: eine ganze Zahl größer oder gleich 3.
- $R_1$: ein Wasserstoffatom, einen Alkyl-, Alkenyl-, Halogenalkyl-, Halogenalkenylrest, wobei diese verschiedenen Reste 1 bis 5 Kohlenstoffatome haben und gegebenenfalls 1 bis 6 Chlor- und/oder Fluoratome tragen; einen Cycloalkyl-, Cycloalkenylrest mit 3 bis 8 Kohlenstoffatomen und gegebenenfalls substituiert durch 1 bis 4 Chlor- und/oder Fluoratome; einen Cyanoalkylrest mit 3 bis 4 Kohlenstoffatomen; einen Phenyl-, Alkylphenyl- oder Phenylalkylrest mit 6 bis 8 Kohlenstoffatomen, wobei diese Reste gegebenenfalls durch 1 bis 4 Chlor- und/oder Fluoratome substituiert sind.
- $R_2$: einen Rest wie $R_1$ oder auch eine Hydroxyl- oder Alkoxylgruppe $-OR_3$, wobei $R_3$ dieselbe Bedeutung wie $R_1$ hat.

10. Verfahren gemäß einem der Ansprüche 1 bis 8, dadurch gekennzeichnet, daß die Organopolysiloxanverbindungen mit geringeren Molekularmassen aus Cyclosiloxanen der Formel (I)

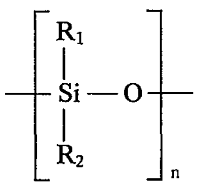

(I)

bestehen, assoziiert mit Organopolysiloxanen der allgemeinen Formel (II)

$$(R_1)_xSiO_{\frac{4-x}{2}} \qquad \text{(II)}$$

gegebenenfalls assoziiert mit Gruppierungen der Formel (III)

$$(R_1)_y(R_2)_zSiO_{\frac{4-y-z}{2}} \qquad \text{(III)}$$

wobei die Organopolysiloxane höchstens 200 Siliciumatome pro Mol haben und die verschiedenen Symbole die folgende Bedeutung haben:

- $R_1$: ein Wasserstoffatom, ein Alkyl-, Alkenyl-, Halogenalkyl-, Halogenalkenylrest, wobei diese verschiedenen Reste 1 bis 5 Kohlenstoffatome haben und gegebenenfalls 1 bis 6 Chlor- und/oder Fluoratome tragen; ein Cycloalkyl-, Cycloalkenylrest mit 3 bis 8 Kohlenstoffatomen, gegebenenfalls substituiert durch 1 bis 4 Chlor- und/oder Fluoratome; ein Cyanoalkylrest mit 3 bis 4 Kohlenstoffatomen; ein Phenyl-, Alkylphenyl- oder Phenylalkylrest mit 6 bis 8 Kohlenstoffatomen, wobei diese Reste gegebenenfalls durch 1 bis 4 Chlor- und/oder Fluoratome substituiert sind.
- $R_2$: ein Rest wie $R_1$ oder auch eine Hydroxyl- oder Alkoxygruppe $-OR_3$, wobei $R_3$ dieselbe Bedeutung wie $R_1$ hat.
- x und y: ganze Zahlen gleich 0, 1, 2 oder 3.
- z: ganze Zahl gleich oder unterhalb 2.

11. Verfahren gemäß Anspruch 10, dadurch gekennzeichnet, daß die Organopolysiloxanverbindungen mit geringerer Molekularmasse aus mindestens 50% $D_3$ und/oder $D_4$ bestehen, wobei die Ergänzung aus einem linearen Organopolysiloxan »$M_2D_p$« mit der Formel (IV)

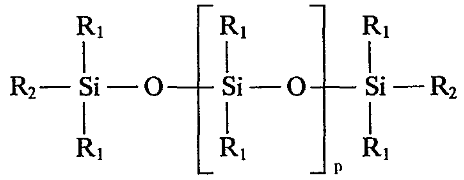

(IV)

besteht, wobei die verschiedenen Symbole die folgende Bedeutung haben:

- p: eine ganze Zahl von 1 bis 100.
- $R_1$: ein Wasserstoffatom, ein Alkyl-, Alkenyl-, Halogenalkyl-, Halogenalkenylrest, wobei diese verschiedenen Reste 1 bis 5 Kohlenstoffatome haben und gegebenenfalls 1 bis 6 Chlor- und/oder Fluoratome tragen; ein Cycloalkyl-, Cycloalkenylrest mit 3 bis 8 Kohlenstoffatomen und gegebenenfalls substituiert durch 1 bis 4 Chlor- und/oder Fluoratome; ein Cyanoalkylrest mit 3 bis 4 Chlor- und/oder Fluoratomen; ein Cyanoalkylrest mit 3 bis 4 Kohlenstoffatomen; ein Phenyl-, Alkylphenyl- oder Phenylalkylrest mit 6 bis 8 Kohlenstoffatomen, wobei diese Reste gegebenenfalls durch 1 bis 4 Chlor- und/oder Fluoratome substituiert sind.
- $R_2$: ein Rest wie $R_1$ oder auch eine Hydroxyl- oder Alkoxylgruppe $-OR_3$, wobei $R_3$ dieselbe Bedeutung wie $R_1$ hat.

## Claims

1. Process for the preparation of high molecular mass organopolysiloxanes by polymerization and rearrangement of relatively low molecular mass organopolysiloxanes in the presence of a catalyst bearing acid groups, characterised in that the catalyst consists of a porous inorganic support with a mean pore diameter greater than 2 nm (20 Angstroms), a pore volume of between 0.2 and 2 ml/g, the support being coated with a quantity smaller than 15 $mg/m^2$ of a polymeric material bearing acid groups chosen from sulphonic or phosphonic groups and having an ion exchange capacity lower than 2 milliequivalents per g.

2. Process according to Claim 1 in which the mean pore diameter of the porous inorganic support is between 2 nm (20 Angstroms) and 300 nm (3,000 Angstroms).

3. Process according to either of Claims 1 and 2, in which the pore volume of the inorganic support is between 0.2 and 1.5 ml/g.

4. Process according to one of Claims 1 to 3, in which the porous inorganic support has a mean pore diameter of between 2 and 250 nm (20 and 2,500 Angstroms), a pore volume of between 0.2 and 1 ml/g and a particle size of between 4 µm and 5 mm.

5. Process according to one of Claims 1 to 4, in which the polymeric material coating contains sulphonic groups.

6. Process according to Claim 5, in which the ion exchange capacity is below 1 milliequivalent $H^+$ per gramme.

7. Process according to any one of the preceding claims, characterised in that the said inorganic support is bodies made of siliceous gels.

8. Process according to Claim 7, characterised in that the said polymeric material is fixed on the said inorganic porous support.

9. Process according to one of the preceding claims, in which the organopolysiloxane compounds of lower molecular masses consist of cyclosiloxanes of formula (I):

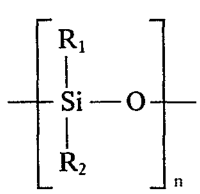

(I)

in which the various symbols denote:

- n: an integer greater than or equal to 3.
- $R_1$: a hydrogen atom, an alkyl, alkenyl, halogenoalkyl, or halogenoalkenyl radical, these various radicals having from 1 to 5 carbon atoms and containing, if appropriate, from 1 to 6 chlorine and/or fluorine atoms; a cycloalkyl or cycloalkenyl radical, these radicals having from 3 to 8 carbon atoms

and being optinally substituted by 1 to 4 chlorine and/or fluorine atoms; a cyanoalkyl radical having from 3 to 4 carbon atoms; a phenyl, alkylphenyl or phenylalkyl radical having from 6 to 8 carbon atoms, these radicals being optionally substituted by 1 to 4 chlorine and/or fluorine atoms.
— $R_2$: a radical such as $R_1$ or alternatively a hydroxy or alkoxy group $-OR_3$, $R_3$ having the same meaning as $R_1$.

10. Process according to one of Claims 1 to 8, in which the organopolysiloxane compounds of lower molecular masses consist of cyclosiloxanes of formula (I):

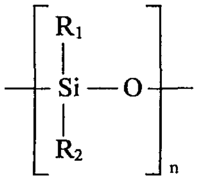

(I)

associated with organopolysiloxanes of general formula (II):

$$(R_1)_xSiO_{\frac{4-x}{2}} \quad (II)$$

optionally associated with moieties of formula (III):

$$(R_1)_y(R_2)_zSiO_{\frac{4-y-z}{2}} \quad (III)$$

the organopolysiloxanes having at most 200 silicon atoms per mole and the various symbols having the following meaning:

— $R_1$: a hydrogen atom, an alkyl, alkenyl, halogenoalkyl or halogenoalkenyl radical, these various radicals having from 1 to 5 carbon atoms and containing, if appropriate, from 1 to 6 chlorine and/or fluorine atoms; a cycloalkyl or cycloalkenyl radical, these radicals having from 3 to 8 carbon atoms and being optionally substituted by 1 to 4 chlorine and/or fluorine atoms; a cyanoalkyl radical having from 3 to 4 carbon atoms; a phenyl, alkylphenyl or phenylalkyl radical having from 6 to 8 carbon atoms, these radicals being optionally substituted by 1 to 4 chlorine and/or fluorine atoms.
— $R_2$: a radical such as $R_1$ or alternatively a hydroxy or alkoxy group $-OR_3$, $R_3$ having the same meaning as $R_1$.
— x, and y: integers equal to 0, 1, 2 or 3.
— z: an integer equal to or smaller than 2.

11. Process according to Claim 10, in which the organopolysiloxane compounds of lower molecular mass consist of at least 50% of $D_3$ and/or of $D_4$, the remainder consisting of a straight-chain organopolysiloxane »M2Dp« and having the formule (IV):

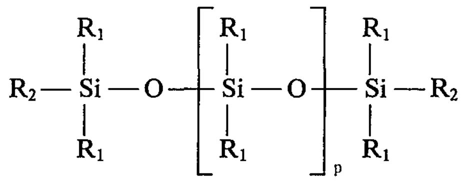

(IV)

the various symbols having the following meaning:

— p: an integer ranging from 1 to 100
— $R_1$: a hydrogen atom, an alkyl, alkenyl, halogenoalkyl or halogenoalkenyl radical, these various radicals having from 1 to 5 carbon atoms and containing, if appropriate, from 1 to 6 chlorine and/or fluorine atoms; a cycloalkyl or cycloalkenyl radical, these radicals having from 3 to 8 carbon atoms and being optionally substituted by 1 to 4 chlorine and/or fluorine atoms; a cyanoalkyl radical having from 3 to 4 chlorine and/or fluorine atoms; a cyanoalkyl radical having from 3 to 4 carbon atoms; a phenyl, alkylphenyl or phenylalkyl radical having from 6 to 8 carbon atoms, these radicals being optionally substituted by 1 to 4 chlorine and/or fluorine atoms.
— $R_2$: a radical such as $R_1$ or alternatively a hydroxy or alkoxy group $-OR_3$, $R_3$ having the same meaning as $R_1$.